# EUROPEAN PATENT APPLICATION

(11) **EP 3 486 026 A1**
(43) Date of publication of application: **22.05.2019**
(21) Application number: 17827326.4
(22) Date of filing: 16.06.2017
(51) Int. Cl.: B23K 26/082, B23K 26/00

(54) **LASER PROCESSING METHOD AND LASER PROCESSING APPARATUS**

(30) Priority: 13.07.2016 JP 2016138630
(71) Applicant: Omron Corporation, Kyoto-shi, Kyoto 600-8530 (JP)
(72) Inventor: USAMI, Hironori, Kyoto-shi Kyoto 600-8530 (JP); FUTAGAMI, Yoshihiro, Kyoto-shi Kyoto 600-8530 (JP); OHTA, Fumitaka, Kyoto-shi Kyoto 600-8530 (JP)
(74) Representative: Horn Kleimann Waitzhofer Patentanwälte PartG mbB
(86) International application number: PCT/JP2017/022337
(87) International publication number: WO 2018/012195

(57) **Abstract**

A laser machining method is performed using a laser machining apparatus including a laser light source that emits laser light and a scanning mechanism for causing the laser light to scan, and the method includes a step of causing laser light to scan a region to be machined (11a). The scanning step includes changing the scanning direction of laser light in a direction change portion within the region to be machined (11a) a plurality of times.

## Description

### TECHNICAL FIELD

The present invention relates to a laser machining method and a laser machining apparatus.

### RELATED ART

Laser machining methods for various types of machining such as drawing letters, graphics, and the like onto the surface of a workpiece, opening a hole, exfoliation, and cutting, as well as laser machining apparatuses for performing such laser machining have been proposed so far. For example, JP-A-2007-268576 (Patent Document 1) discloses a laser machining method using laser light with a diameter smaller than the diameter of a hole to be machined. In this laser machining method, laser light is moved along a spiral trajectory that connects the center and the outer edge of a hole or a trajectory of concentric circles that are centered at the center of the hole. The start point of a trajectory is at a position of mutual rotation about the center of the hole.

For example, JP-A-2011-170359 (Patent Document 2) discloses a laser machining method for forming a plurality of recessed portions in a glass substrate for mask blanks using laser light. In this laser machining method, recessed portions are formed by moving laser light along spiral trajectories or circulating trajectories centered on the centers of the recessed portions, such that trajectories of an engraved portion that is being engraved by the laser light overlap at least partially.

### RELATED ART DOCUMENTS

### PATENT DOCUMENTS

Patent Document 1: JP-A-2007-268576
Patent Document 2: JP-A-2011-170359

### SUMMARY OF THE INVENTION

### PROBLEM TO BE SOLVED BY THE INVENTION

The energy amount per unit area is an element that determines a result of laser machining such as clearness of a letter or graphics on the surface of a workpiece and the depth of a hole formed in the workpiece. The energy amount per unit area depends on the power of the laser light and the scanning speed of the laser light.

By outputting a high-powered laser light from a laser machining apparatus, it is possible to increase the energy amount per unit area on a workpiece surface. On the other hand, if the power of laser light that is output from the laser machining apparatus is low, it is necessary to decrease the scanning speed of the laser light in order to increase the energy amount per unit area. However, the lower the scanning speed of laser light is, the longer the time required for machining is. In the case of machining using low-powered laser light, there is an issue that it is difficult to achieve desired machining quality while preventing the machining time from being longer.

The present invention aims to provide a laser machining method and a laser machining apparatus that make it possible to increase the machining quality while preventing a decrease in the machining speed.

### MEANS FOR SOLVING THE PROBLEMS

A laser machining method according to one aspect of the present invention is performed using a laser machining apparatus including a laser light source that emits laser light and a scanning mechanism for causing the laser light to scan, and includes a step of causing the laser light to scan a region to be machined. The scanning step includes changing a scanning direction of the laser light a plurality of times in a direction change portion within the region to be machined.

Accordingly, it is possible to increase the machining quality while preventing a decrease in the machining speed. In the direction change portion, the scanning speed decreases by changing the scanning direction of the laser light. Therefore, by changing the scanning direction of the laser light a plurality of times in the direction change portion in the region to be machined, it is possible to increase the energy amount per unit area in the direction change portion. When machining the region to be machined using low-powered laser light, it is possible to perform machining (for example, marking and opening a hole) that provides desired quality, while keeping a time required for the laser light to scan the region to be machined from being longer.

The region to be machined is a unit region in which processing of laser machining is performed. For example, when forming a hole in a certain region through laser machining, the region is equivalent to the region to be machined.

Typically, the direction change portion is positioned at the center of the region to be machined. However, there is no limitation thereto. The direction change portion may be at a position separated from the center of the region to be machined.

Preferably, the changing of the scanning direction in the direction change portion may include changing the scanning direction of the laser light in a direction that forms an acute angle with respect to a scanning direction before being changed, in the direction change portion.

Accordingly, it is possible to further decrease the scanning speed of the laser light in the direction change portion to a degree to which the machining speed does not decrease largely. Therefore, it is possible to further increase the energy amount per unit area in the direction change portion.

Preferably, the changing of the scanning direction in the direction change portion may include changing the scanning direction in the direction change portion every time the laser light scans in a direction toward the direction change portion.

Accordingly, it is possible to further increase the energy amount per unit area in the direction change portion.

Preferably, the scanning step may include a combination of changing the scanning direction in the direction change portion and changing the scanning direction outward of the direction change portion.

Accordingly, if it is not preferable that the power of laser light concentrates excessively in the direction change portion, the power of the laser light can be dispersed in a region outward of the direction change portion.

Preferably, the scanning step may include at least one of a step of causing the laser light to scan from points on a curve outward of the direction change portion toward the direction change portion and a step of causing the laser light to scan from the direction change portion toward the points on the curve.

Accordingly, a machining shape having a curve in planar view (typically, a circular hole) can be formed in the region to be machined.

Preferably, the scanning step may include at least one of a step of causing the laser light to scan from points on sides of a polygon that surrounds the direction change portion toward the direction change portion and a step of causing the laser light to scan from the direction change portion toward the points on the sides of the polygon.

Accordingly, a machining shape having a polygon in planar view can be formed in the region to be machined.

Preferably, the direction change portion may be positioned at a center of the region to be machined.

Accordingly, it is possible to maximize the energy amount per unit area at the center of the region to be machined.

Preferably, the laser machining method may further include a step of repeatedly executing the scanning step on the next region to be machined so as to form a plurality of cells.

Accordingly, for example, when machining a plurality of machining regions, it is possible to repeat the same machining at a precise pitch.

Preferably, the plurality of cells may be arranged two-dimensionally.

Accordingly, marking can be performed, for example.

Preferably, the plurality of cells may be arranged one-dimensionally.

Accordingly, a groove can be formed, for example.

A laser machining apparatus according to one aspect of the present invention includes a laser light source that emits laser light, a scanning mechanism for causing the laser light to scan, and a control unit that controls the scanning mechanism, and the control unit controls the scanning mechanism so as to change a scanning direction of the laser light a plurality of times in a direction change portion within a region to be machined.

Accordingly, it is possible to realize a laser machining apparatus that can increase the machining quality while preventing a decrease in the machining speed.

Preferably, the control unit may control the scanning mechanism so as to change the scanning direction of the laser light in a direction that forms an acute angle with respect to a scanning direction before being changed.

Accordingly, it is possible to further decrease the scanning speed of the laser light in the direction change portion to a degree to which the machining speed does not largely decreases. Therefore, it is possible to further increase the energy amount per unit area in the direction change portion.

Preferably, the control unit may control the scanning mechanism such that the laser light scans in accordance with a scanning pattern that includes a plurality of straight lines extending radially from the direction change portion.

Accordingly, it is possible to further increase the energy amount per unit area in the direction change portion.

Preferably, the scanning pattern may include a pattern in which the scanning direction of the laser light is folded back outward of the direction change portion.

Accordingly, when it is not preferable that the power of laser light concentrates excessively in the direction change portion, the power of the laser light can be dispersed in a region outward of the direction change portion.

Preferably, the scanning pattern may include a straight line that connects a curve that surrounds the direction change portion and the direction change portion.

Accordingly, it is possible to form a machining shape having a curve in planar view (typically, a circular hole) in the region to be machined.

Preferably, the scanning pattern may include a straight line that connects the direction change portion and sides of a polygon that surrounds the direction change portion.

Accordingly, a machining shape that includes a polygon in planar view can be formed in the region to be machined.

### EFFECTS OF THE INVENTION

According to the present invention, it is possible to provide a laser machining method and a laser machining apparatus that make it possible to increase the machining quality while preventing a decreases in the machining speed.

### BRIEF DESCRIPTION OF THE DRAWINGS

- FIG. 1: is a diagram showing a configuration example of a laser machining apparatus according to an embodiment of the present invention.
- FIG. 2: is a schematic diagram an example of scanning of laser light for machining the surface of a workpiece.
- FIG. 3: is a diagram showing a principle of scanning of laser light using a laser machining method according to an embodiment of the present invention.
- FIG. 4: is a diagram showing an example of a scanning pattern of laser light for laser machining according to an embodiment of the present invention.
- FIGS. 5A and 5B: are schematic cross-sectional views of a workpiece for illustrating a result of laser machining according to an embodiment of the present invention.
- FIG. 6: is a diagram showing results of shooting a hole formed in a region to be machined in a workpiece, along the depth direction of the region to be machined.
- FIG. 7: is a flowchart for illustrating a laser machining method according to an embodiment of the present invention.
- FIG. 8: is a diagram showing an example of a scanning pattern of laser light in a laser machining method according to an embodiment of the present invention.
- FIG. 9: is a diagram showing another example of a scanning pattern of laser light in the laser machining method according to the embodiment of the present invention.
- FIG. 10: is a diagram showing yet another example of a scanning pattern of laser light in the laser machining method according to the embodiment of the present invention.
- FIG. 11: is a diagram showing yet another example of a scanning pattern of laser light in the laser machining method according to the embodiment of the present invention.
- FIG. 12: is a diagram showing yet another example of a scanning pattern of laser light in the laser machining method according to the embodiment of the present invention.
- FIG. 13: is a diagram showing yet another example of a scanning pattern of laser light in the laser machining method according to the embodiment of the present invention.
- FIG. 14: is a diagram showing yet another example of a scanning pattern of laser light in the laser machining method according to the embodiment of the present invention.
- FIG. 15: is a diagram showing yet another example of a scanning pattern of laser light in the laser machining method according to the embodiment of the present invention.
- FIG. 16: is a diagram showing yet another example of a scanning pattern of laser light in the laser machining method according to the embodiment of the present invention.
- FIG. 17: is a diagram showing yet another example of a scanning pattern of laser light in the laser machining method according to the embodiment of the present invention.
- FIG. 18: is a schematic diagram showing an example of machining using a laser machining method according to an embodiment of the present invention.
- FIG. 19: is a schematic diagram showing another example of machining using the laser machining method according to the embodiment of the present invention.

### EMBODIMENTS OF THE INVENTION

Embodiments of the present invention will be described in detail with reference to the drawings. Note that the same reference numerals are assigned to the same or equivalent portions in the following drawings, and their description is not repeated.

### 1. Laser Machining Apparatus and Laser Machining Method

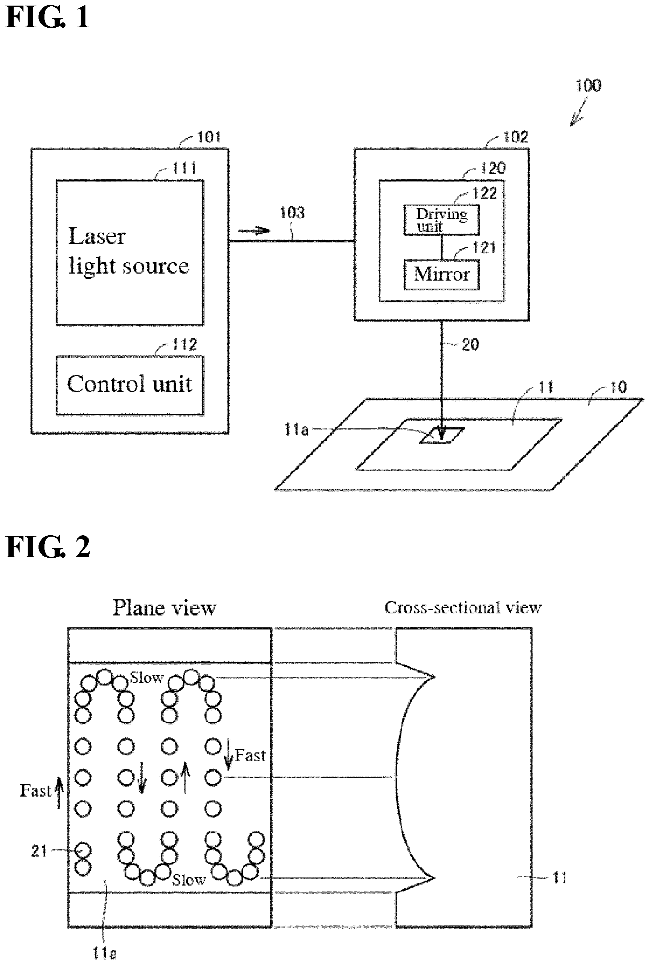

Fig. 1 is a diagram showing a configuration example of a laser machining apparatus according to this embodiment. As shown in Fig. 1, a laser machining apparatus 100 according to the embodiment of the present invention includes a controller 101, a head portion 102, and a cable 103.

The controller 101 includes a laser light source 111 that emits laser light and a control unit 112. The type of the laser light source 111 is not particularly limited. For example, a fiber laser can be used for the laser light source 111. The laser light source 111 may be a solid-state laser such as a YAG laser or a gas laser such as a CO₂ laser. The laser light from the laser light source 111 is pulse light, for example. However, the laser light may also be continuous (CW) light. The control unit 112 integrally controls the laser machining apparatus 100.

In the embodiment of the present invention, the power (average power) of laser light is not limited particularly. In an example of the embodiment of the present invention, the average power of laser light is 20 W. In the laser machining apparatus and laser machining method according to the embodiment of the present invention, it is possible to use laser light with less power than the average power (e.g., 50 W or more) of a conventional laser machining apparatus. However, it should be noted that the present invention is not limited to use of low-powered laser light.

The head portion 102 is connected to the controller 101 using the cable 103. For example, the cable 103 can include an optical fiber cable for transmitting light from the laser light source 111 to the head portion 102, a signal cable for transmitting a control signal from the control unit 112 to the head portion 102, and a power supply cable for supplying power to the head portion 102, or the like.

The head portion 102 includes a scanning mechanism 120 for causing laser light generated by the laser light source 111 to scan. The scanning mechanism 120 includes a mirror 121 and a driving unit 122 that drives the mirror 121. Laser light generated by the laser light source 111 is reflected by the mirror 121, and the surface of a workpiece 11 placed on a stage 10 is irradiated. A region 11a to be machined within the surface of the workpiece 11 is irradiated with laser light 20, and thereby the region 11a to be machined is machined.

The driving unit 122 drives the mirror 121 in response to a control signal from the control unit 112. Accordingly, the laser light 20 scans. The scanning mechanism 120 can be realized by a galvano mirror, for example. The scanning mechanism 120 may cause laser light to scan in a primary direction or secondary direction, or both the primary direction and secondary direction.

In this embodiment, the controller 101 and the head portion 102 are separate bodies. However, the controller 101 and the head portion 102 may also be accommodated in one housing.

Fig. 2 is a schematic diagram showing an example of scanning of laser light for machining the surface of a workpiece. As shown in Fig. 2, the region 11a to be machined is a portion of the surface of the workpiece 11 shown in Fig. 1, and is a unit region for performing processing of laser machining. For example, the laser light is pulse light, and reciprocally scans the region 11a to be machined. A spot 21 indicates a location in the region 11a to be machined that is irradiated with laser light.

In a peripheral edge portion of the region 11a to be machined, the scanning direction of laser light is changed, and thus the scanning speed of the laser light decreases. In a central portion of the region 11a to be machined, the scanning speed of laser light is higher than at the peripheral edge portion of the region 11a to be machined.

The depth of a hole that is formed at the position of the spot 21 depends on the energy density per unit area. In the peripheral edge portion of the region 11a to be machined, the scanning speed of laser light is low, and thus the energy density per unit area is high. Therefore, as shown in the plan view and cross-sectional view in Fig. 2, a deeper spot is formed in the peripheral edge portion of the region 11a to be machined. On the other hand, at the central portion of the region 11a to be machined, the scanning speed of laser light is high, and thus the energy density per unit area is low. If the power of laser light is small, a shallow hole tends to be formed in the central portion of the region 11a to be machined compared with the peripheral edge portion of the region 11a to be machined. Therefore, in the entire region 11a to be machined, machining using laser light can be insufficient.

In the embodiment of the present invention, due to improvement in scanning of laser light, desired machining such as marking or forming of a hole can be performed in the region 11a to be machined even using low-powered laser light. The embodiment of the present invention will be described below in detail.

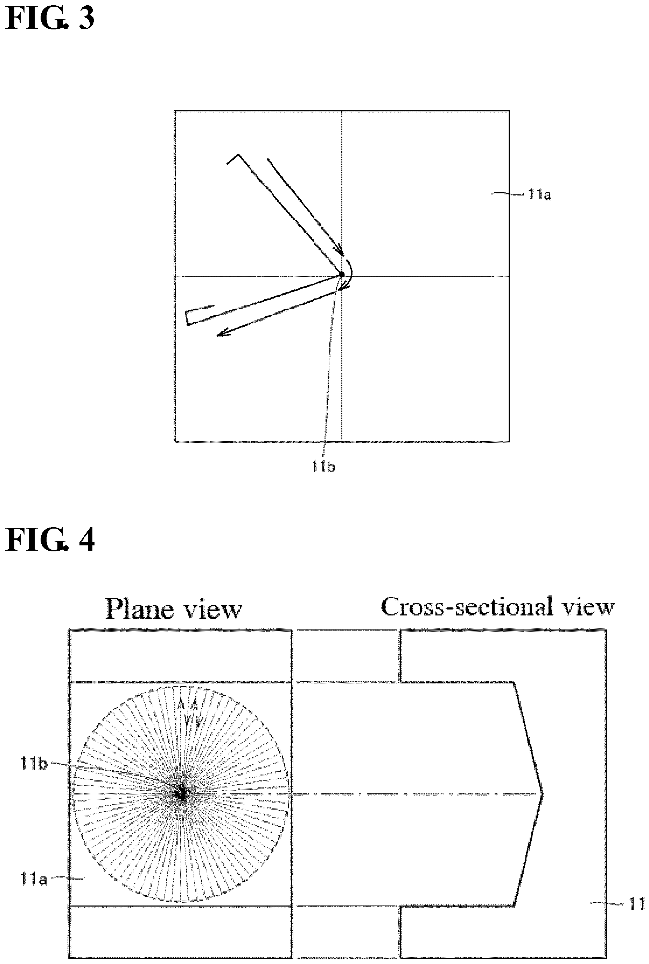

Fig. 3 is a diagram showing a principle of scanning of laser light using the laser machining method according to the embodiment of the present invention. As shown in Figs. 1 and 3, in the embodiment of the present invention, in a central portion 11b in the region 11a to be machined, the scanning direction of laser light is changed. At a position at which the scanning direction of laser light is changed, the scanning speed of laser light decreases, and thus energy density per unit area increases. Therefore, by causing laser light to scan as shown in Fig. 3, the energy density per unit area can be increased in the central portion 11b of the region 11a to be machined.

Fig. 4 is a diagram showing an example of a scanning pattern of laser light for laser machining according to the embodiment of the present invention. As shown in Fig. 4, the scanning direction of laser light is repeatedly changed in the central portion 11b of the region 11a to be machined. In the central portion 11b of the region 11a to be machined, the scanning direction of laser light is changed a plurality of times, and thus, the energy per unit area can be further increased in the central portion of the region 11a to be machined. Accordingly, a deeper hole can be formed.

In one embodiment, the control unit 112 and the scanning mechanism 120 of the laser machining apparatus 100 change, in the central portion 11b of the region 11a to be machined, the scanning direction of laser light in a direction that forms an acute angle with respect to the scanning direction of the laser light before being changed. Accordingly, for example, it is possible to further decrease the scanning speed of laser light in the central portion 11b of the region 11a to be machined to a degree to which the machining speed does not largely decreases. Therefore, it is possible to further concentrate the energy in the central portion of the region 11a to be machined.

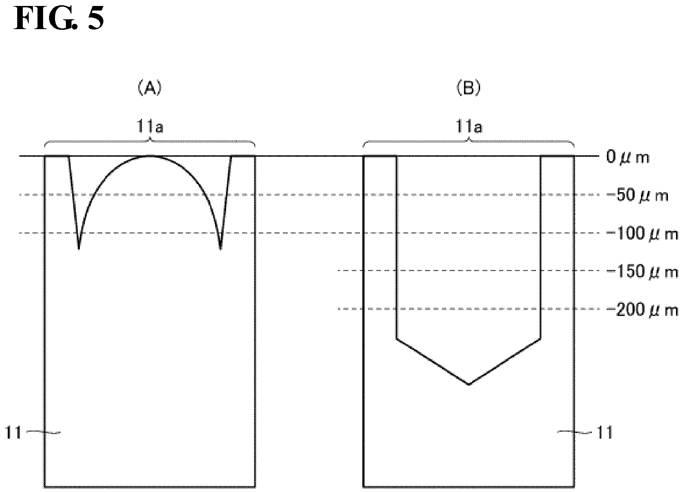

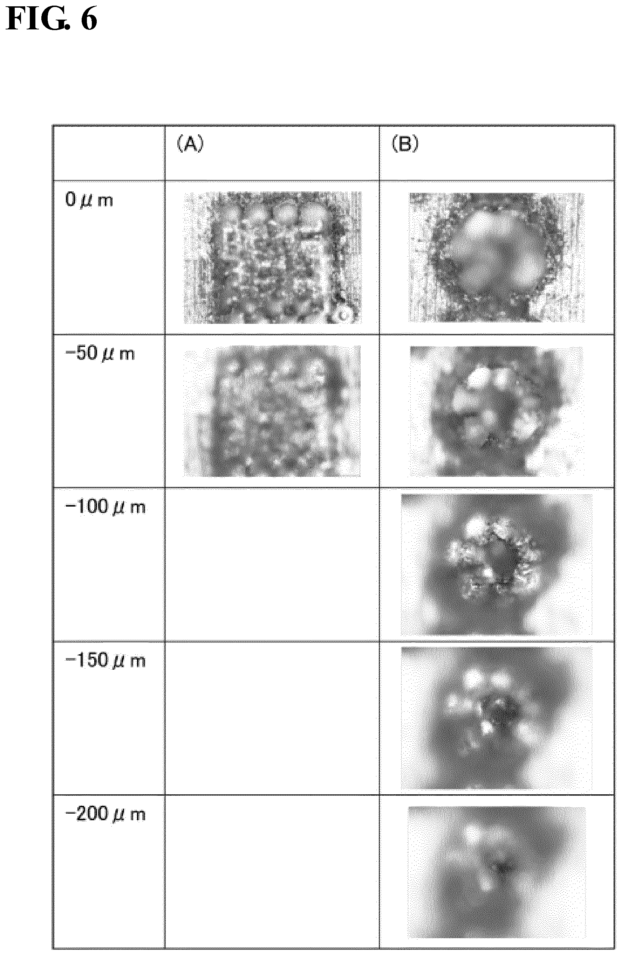

Figs. 5A and 5B are schematic cross-sectional views of the workpiece 11 for illustrating results of laser machining according to the embodiment of the present invention. Fig. 5A is a cross-sectional view schematically showing a result of machining a workpiece using an ordinary scanning method of laser light shown in Fig. 2. Fig. B is a cross-sectional view schematically showing a result of machining a workpiece using a laser machining method according to the embodiment of the present invention. Fig. 6 is a diagram showing a result of shooting a hole formed in the region 11a to be machined, from the region 11a to be machined of the workpiece 11 along the depth direction. Figs. 5A and 5B are the same regarding the material of the workpiece 11 and the power of laser light, but differ regarding the scanning of the laser light.

As shown in Figs. 5A and 6, according to the ordinary scanning method of laser light shown in Fig. 2, a deep hole is formed at the edge portions of the region 11a to be machined. In the central portion of the region 11a to be machined, it is difficult to confirm a trace of a hole having been formed from the surface of the workpiece 11 to the depth 50 µm. On the other hand, as shown in Figs. 5B and 6, according to the embodiment of the present invention, it is possible to confirm that the depth of a hole formed in the central portion of the region 11a to be machined reaches at least 200 µm from the surface of the workpiece 11.

In addition, if the ordinary scanning method of laser light shown in Fig. 2 is used, the time required for forming a hole with a depth 100 µm in the workpiece 11 whose material is aluminum is about 62 seconds. On the other hand, according to the embodiment of the present invention, a hole with a depth 100 µm can be formed in the workpiece 11 in about 23 seconds. On the other hand, if a time period for forming a hole is fixed to 10 seconds, the depth of the formed hole is 15 µm, in the ordinary scanning method of laser light shown in Fig. 2. By contrast, if a hole with the same diameter is formed using the laser machining method according to the embodiment of the present invention, the depth of the hole is 60 µm.

As described above, according to the embodiment of the present invention, the machining speed can be increased without increasing the power (output) of laser light. Accordingly, the machining time can be shortened. Alternatively, according to the embodiment of the present invention, the same machining (for example, marking and forming a hole) can be realized with lower-powered laser light. Therefore, the laser machining apparatus can be realized inexpensively.

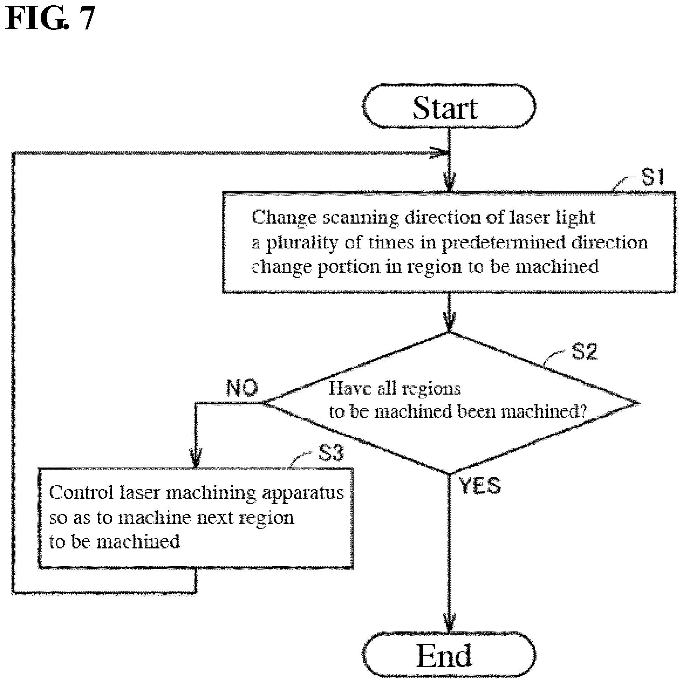

Fig. 7 is a flowchart for illustrating the laser machining method according to the embodiment of the present invention. As shown in Figs. 1 and 7, when processing is started, the laser machining apparatus 100 causes laser light to scan the region 11a to be machined in step S1. More specifically, the laser machining apparatus 100 changes the scanning direction of laser light a plurality of times in a predetermined direction change portion in the region 11a to be machined.

The "predetermined direction change portion" is typically the central portion 11b of the region 11a to be machined, but there is no limitation thereto. As will be illustrated later, "direction change portion" may also be a location separated from the central portion 11b of the region 11a to be machined.

As shown in Fig. 3, the laser machining apparatus 100 changes, in the direction change portion, the scanning direction of laser light that is directed toward the direction change portion (for example, the central portion 11b) in the region 11a to be machined. Specifically, the laser machining apparatus 100 repeats scanning of laser light so as to be folded back in the direction change portion.

Next, in step S2, it is determined whether or not all of the regions 11a to be machined in the workpiece 11 have been machined. This determination is executed by the control unit 112. If it is determined that all the regions 11a to be machined have been machined (YES in step S2), the processing ends. On the other hand, if it is determined that there is a region 11a yet to be machined (NO in step S2), the procedure advances to step S3.

In step S3, the control unit 112 controls the laser machining apparatus 100 so as to machine the next region 11a to be machined. This control can include control of the laser light source 111 and control of the driving unit 122 of the scanning mechanism 120, for example. After the processing in step S3 is executed, overall processing returns to step S1, and the processing in step S1 is executed on all the regions 11a to be machined.

### 2. Example of Scanning of Laser Beam

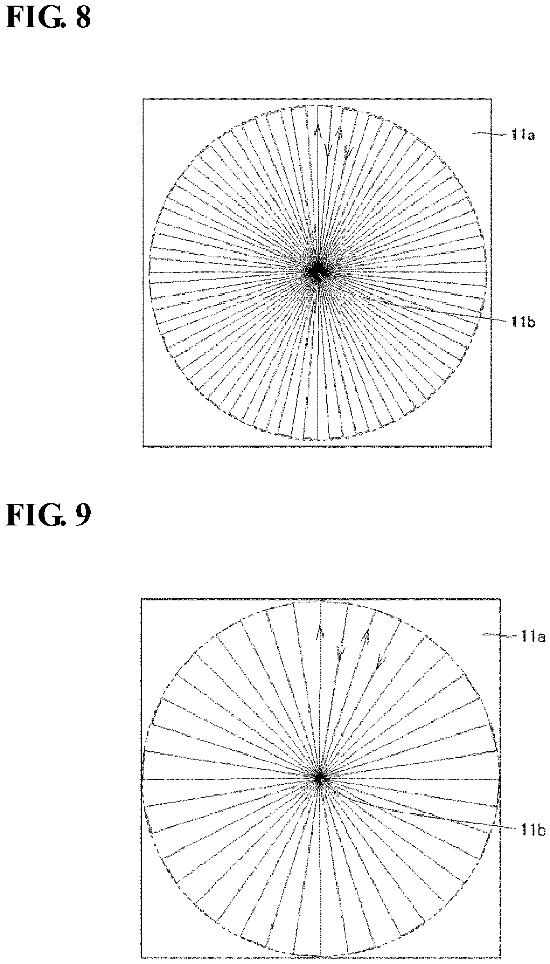

Figs. 8 to 17 show examples of scanning patterns of laser light using the laser machining method according to the embodiment of the present invention. In Fig. 8, the scanning pattern of laser light is a pattern in which a plurality of the same fan-like shapes are arranged at an equal angle centered on the central portion 11b of the region 11a to be machined. Laser light scans from the central portion 11b of the region 11a to be machined to a peripheral edge portion of the region 11a to be machined, and, in the peripheral edge portion of the region 11a to be machined, scans along an arc or a straight line. Next, the laser light scans from the peripheral edge portion of the region 11a to be machined to the central portion 11b of the region 11a to be machined, and again scans from the central portion 11b of the region 11a to be machined to the peripheral edge portion of the region 11a to be machined. Trajectories of laser light extend radially from the central portion 11b of the region 11a to be machined, and in the peripheral edge portion of the region 11a to be machined, form a broken line-like (in other words, discontinuous) circumference.

Fig. 9 is a diagram showing another example of a scanning pattern of laser light, in the laser machining method according to the embodiment of the present invention. The scanning pattern in Fig. 9 is a pattern in which the density of arrangement of fan-like shapes is sparse compared with the pattern shown in Fig. 8. In the pattern shown in Fig. 9, the central angle of the fan-like shapes and an angle formed by two adjacent fan-shaped patterns are large compared with the pattern shown in Fig. 8. However, either the central angle of the fan-like shapes or the angle formed by two adjacent fan-like patterns may be larger than the corresponding angle in the pattern shown in Fig. 8. As is the case with the pattern shown in Fig. 9, the density of arrangement of fan-like shapes in such a scanning pattern can also be made sparse compared with the pattern shown in Fig. 8.

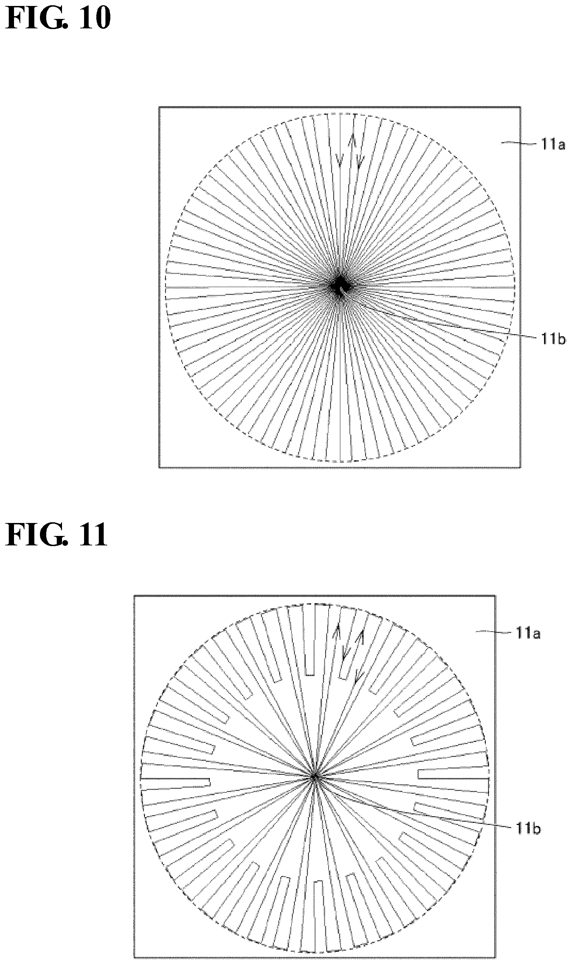

Fig. 10 is a diagram showing yet another example of a scanning pattern of laser light in the laser machining method according to the embodiment of the present invention. The pattern shown in Fig. 10 is a pattern in which the arcs or straight lines at the peripheral edge portion of the region 11a to be machined are excluded from the pattern shown in Fig. 8. For example, laser light is moved reciprocally on one straight line between the central portion 11b of the region 11a to be machined and the peripheral edge portion of the region 11a to be machined. Next, the laser light is reciprocally moved on another straight line between the central portion 11b of the region 11a to be machined and the peripheral edge portion of the region 11a to be machined. Similar to the pattern shown in Fig. 8 or 9, the laser light scans from the peripheral edge portion of the region 11a to be machined to the central portion 11b of the region 11a to be machined, and the scanning direction is changed in the central portion 11b, and the laser light scans from the central portion 11b of the region 11a to be machined to the peripheral edge portion.

In the patterns shown in Figs. 8 to 10, every time laser light scans toward the central portion 11b of the region 11a to be machined, the scanning direction of the laser light is changed in the central portion 11b of the region 11a to be machined. More specifically, when laser light scans toward the central portion 11b, the position at which the scanning direction of the laser light is changed (direction change portion) is the center point of the region 11a to be machined. However, in the embodiment of the present invention, scanning of laser light is not limited in this manner.

Fig. 11 is a diagram showing a yet another example of a scanning pattern of laser light in the laser machining method according to the embodiment of the present invention. As shown in Fig. 11, the scanning pattern may include a pattern in which the scanning direction of laser light is folded back outside of the central portion 11b. In a step of scanning of laser light, change of the scanning direction in the central portion 11b of the region 11a to be machined and change of the scanning direction outside of the central portion 11b may be combined. Accordingly, a deep hole can be formed over the entire region 11a to be machined. In addition, it is possible to keep machining in the central portion 11b of the region 11a to be machined from being excessive (for example, a hole from being deeper than necessary).

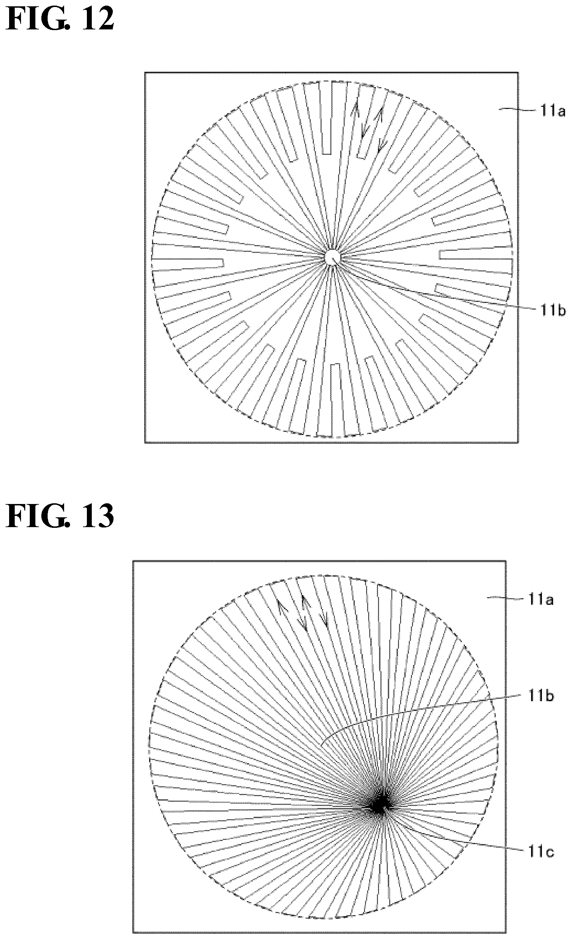

Fig. 12 is a diagram showing yet another example of a scanning pattern of laser light in the laser machining method according to an embodiment of the present invention. The pattern shown in Fig. 12 is different from the pattern shown in Fig. 11 in that the central portion 11b of the region 11a to be machined is not a point but a region with a certain area. If the energy that concentrates at the central point of the region 11a to be machined is too high, the pattern shown in Fig. 12 can be used. Accordingly, the central portion 11b of the region 11a to be machined does not need to be limited to a point, and may be a region that includes the central point of the region 11a to be machined, and has a certain area.

Note that, in the pattern in Fig. 12, the central portion 11b can be defined as a region that occupies 1/3 or less of the area of the entire region 11a to be machined, for example. Accordingly, it is possible to reduce the likelihood of machining of the central portion 11b being insufficient at the time of laser machining (for example, the central portion 11b remains in an island shape).

Furthermore, the direction change portion that is at a position at which the scanning direction of laser light changes does not need to be limited to the central portion of the region 11a to be machined. Fig. 13 is a diagram showing yet another example of a scanning pattern of laser light in the laser machining method according to the embodiment of the present invention. As shown in Fig. 13, a direction change portion 11c may be at a position separated from the central portion 11b of the region 11a to be machined. Note that Figs. 12 and 13 show a scanning pattern in which the scanning direction of laser light is changed in front of the central portion 11b, but a scanning pattern is also possible in which the scanning direction of laser light is changed after the laser light passes through the central portion 11b.

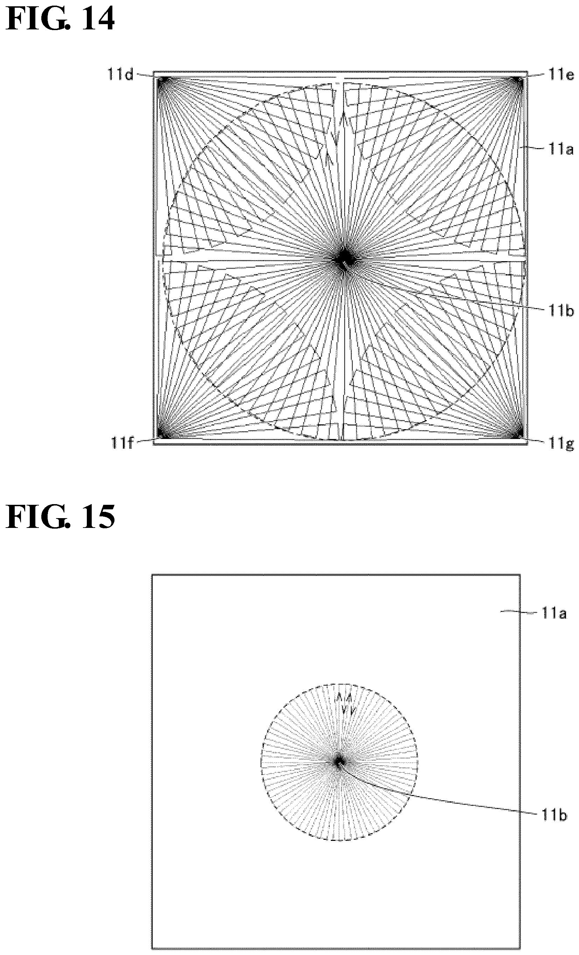

Fig. 14 is a diagram showing yet another example of a scanning pattern of laser light in the laser machining method according to the embodiment of the present invention. In Fig. 14, a pattern in which laser light scan radially from corner portions 11d, 11e, 11g, and 11f of the region 11a to be machined toward the inside of the region 11a to be machined overlaps the scanning pattern shown in Fig. 8. By adopting such a pattern, the entire region 11a to be machined can be evenly engraved deeply.

Fig. 15 is a diagram showing another example of a scanning pattern of laser light, in the laser machining method according to the embodiment of the present invention. The pattern shown in Fig. 15 is equivalent to a pattern acquired by reducing the size of the pattern shown in Fig. 8. If it is required to machine only a narrow region in the vicinity of the central portion 11b of the region 11a to be machined, it is possible to adopt the pattern shown in Fig. 15.

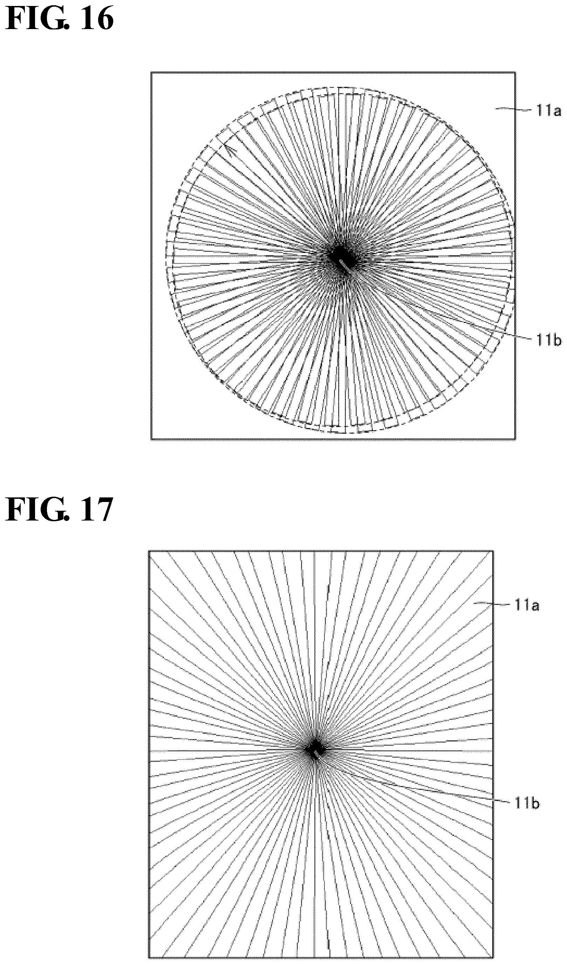

Fig. 16 is a diagram showing another example of a scanning pattern of laser light in the laser machining method according to the embodiment of the present invention. A scanning pattern in which a plurality of (for example, two) patterns are overlapped and misaligned as shown in Fig. 16 may also be used. The patterns may be the same. In that case, the patterns may be patterns shown in Fig. 8, for example. In the example shown in Fig. 16, one of the two patterns is a pattern in which the scanning direction of laser light is changed in the central portion 11b of the region 11a to be machined, and the other pattern is a pattern in which the scanning direction of laser light is changed at a position different from the central portion 11b of the region 11a to be machined. However, there is no limitation thereto. For example, both the two patterns may be a pattern in which the scanning direction of laser light is changed at a position different from the central portion 11b of the region 11a to be machined.

Scanning patterns shown in Figs. 8 to 16 are formed by executing at least one of a step of causing laser light to scan from points on a curve outside of a direction change portion (typically, the central portion 11b) in the region 11a to be machined toward the direction change portion, and a step of causing laser light to scan from the direction change portion toward a point on a curve. The scanning pattern includes straight lines that connect a curve surrounding the direction change portion and the direction change portion. Therefore, the start point or end point of scanning of the laser light is on a curve. In the scanning patterns shown in Fig. 8 to 16, the curve is a circle. However, the type of the curve is not limited to a circle. For example, the curve that surrounds the direction change portion may also be an ellipse. In addition, the curve is not limited to a closed curve, but may also be an open curve. For example, the curve may also be an arc.

Furthermore, the embodiment of the present invention is not limited to a configuration in which the start point or the end point of scanning of the laser light is on a curve. As shown in Fig. 17, the scanning pattern may include straight lines that connect the direction change portion in the region 11a to be machined and the sides of a polygon that surrounds the direction change portion. A step of causing laser light to scan may include at least one of a step of causing laser light to scan from points on sides of a polygon that surrounds the direction change portion (typically, the central portion 11b) in the region 11a to be machined toward the direction change portion and a step of causing the laser light to scan from the direction change portion toward points on the sides of a polygon. In the scanning pattern shown in Fig. 17, the polygon is a rectangle. However, the type of the polygon is not limited.

The laser machining apparatus 100 causes the laser light to scan along one of the above-described scanning patterns. For this reason, the control unit 112 can store programs for executing all or some of the above-described scanning patterns, for example. The control unit 112 may select a scanning pattern illustrated above by executing such a program.

### 3. Application Example of Laser Machining

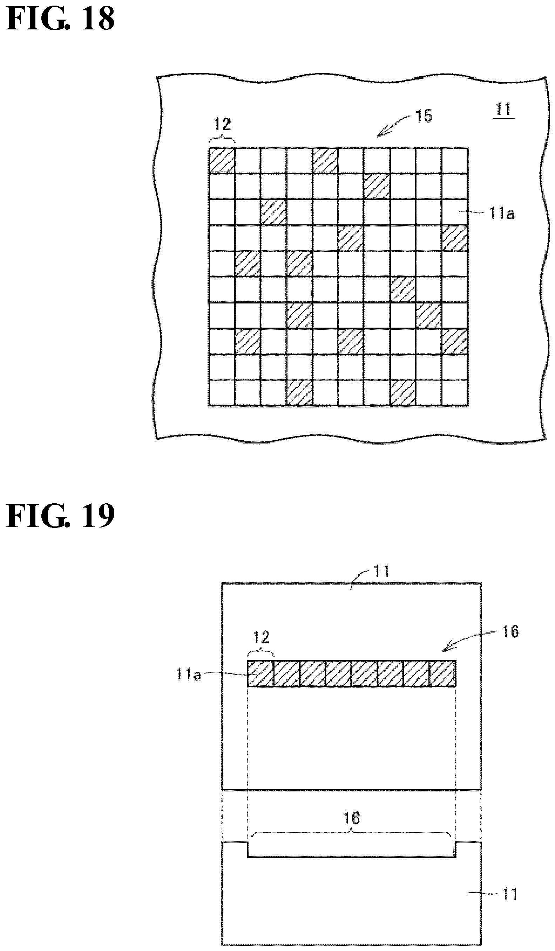

Fig. 18 is a schematic diagram showing an example of machining using the laser machining method according to the embodiment of the present invention. As shown in Fig. 18, for example, the laser machining method according to the embodiment of the present invention can be used for marking a code 15 on the surface of the workpiece 11. The code 15 includes a plurality of cells 12 arranged two-dimensionally, for example. The cells 12 are formed by subjecting respective regions 11a to be machined to laser machining.

The above-described scanning of laser light is executed repeatedly in order to form the cells 12. Accordingly, marks with high visual recognizability can be formed. For example, it is conceivable that, at a manufacturing site, after marking the code 15 on the surface of the workpiece 11, an oil film or paint film adheres over the code 15. If a hole formed in the region 11a to be machined is shallow, it is highly likely that the hole is buried by an oil film or a paint film, and thus the visual recognizability of the code is likely to decrease. Therefore, reading of the code is likely to fail. However, according to the embodiment of the present invention, a deeper hole can be formed in the central portion of the region 11a to be machined, and thus it is possible to reduce the likelihood that the hole is completely buried by an oil film. Therefore, according to the embodiment of the present invention, if an oil film or a paint film adheres over the code 15, it is possible to maintain the high visual recognizability of the code 15.

In addition, depending on a workpiece, cutting machining, polishing, and the like are required in postprocessing in some cases. According to the embodiment of the present invention, a deeper hole can be formed in the region 11a to be machined. Therefore, even if postprocessing as described above is performed, it is possible to further decrease the likelihood of a formed code being lost.

Furthermore, according to the embodiment of the present invention, by adopting the above-described scanning patterns shown in Figs. 8 to 17, the diameter of a machined hole can be made constant to a certain depth. Accordingly, even if postprocessing such as cutting machining or polishing is performed on the workpiece 11, the size of a cell can be maintained.

In addition, regarding printing of a bar code or two-dimensional code, the more precise the pitch of a cell center is, the higher the quality of the code is. According to the embodiment of the present invention, it is possible to engrave most deeply the central portion 11b of the region 11a to be machined, and thus it is possible increase the accuracy of the pitch of a cell center. Therefore, it is possible to print a code with high quality on a workpiece surface.

Furthermore, the laser machining method according to the embodiment of the present invention is not limited to a method for printing a code onto a workpiece surface. Fig. 19 is a schematic diagram showing another example of machining using the laser machining method according to the embodiment of the present invention. As shown in Fig. 19, for example, the laser machining method according to the embodiment of the present invention can be used for forming a linear groove 16 on the surface of the workpiece 11. The groove 16 is constituted by a plurality of cells 12 arranged continuously in a one-dimensional manner. According to the embodiment of the present invention, a deeper groove can be formed on the surface of the workpiece 11. The plurality of cells 12 are cells arranged at an equal pitch, for example. However, the plurality of cells 12 may be cells arranged at unequal pitches.

The disclosed embodiments here are exemplary in all respects, and are to be considered to be non-limitative. The scope of the present invention is indicated by claims, not by the above embodiments, and is intended to include meanings equivalent to claims, and all the modifications in the claims.

### LIST OF REFERENCE NUMERALS

- 10: Stage
- 11: Workpiece
- 11a: Region to be machined
- 11b: Central portion
- 11c: Direction change portion
- 11d, 11e, 11f, 11f: Corner portion
- 12: Cell
- 15: Code
- 16: Groove
- 20: Laser light
- 21: Spot
- 100: Laser machining apparatus
- 101: Controller
- 102: Head portion
- 103: Cable
- 111: Laser light source
- 112: Control unit
- 120: Scanning mechanism
- 121: Mirror
- 122: Driving unit
- S1, S2, S3: Step

## Claims

1. A laser machining method that is performed using a laser machining apparatus including a laser light source that emits laser light and a scanning mechanism for causing the laser light to scan, the method comprising:
a step of causing the laser light to scan a region to be machined,
wherein the scanning step includes:
changing a scanning direction of the laser light a plurality of times in a direction change portion within the region to be machined.

2. The laser machining method according to claim 1,
wherein the changing of the scanning direction in the direction change portion includes:
changing the scanning direction of the laser light in a direction that forms an acute angle with respect to a scanning direction before being changed, in the direction change portion.

3. The laser machining method according to claim 1 or 2,
wherein the changing of the scanning direction in the direction change portion includes:
changing the scanning direction in the direction change portion every time the laser light scans in a direction toward the direction change portion.

4. The laser machining method according to claim 1 or 2,
wherein the scanning step includes:
a combination of changing the scanning direction in the direction change portion and changing the scanning direction outward of the direction change portion.

5. The laser machining method according to any one of claims 1 to 4,
wherein the scanning step includes at least one of:
a step of causing the laser light to scan from points on a curve outward of the direction change portion toward the direction change portion and a step of causing the laser light to scan from the direction change portion toward the points on the curve.

6. The laser machining method according to any one of claims 1 to 4,
wherein the scanning step includes at least one of:
a step of causing the laser light to scan from points on sides of a polygon that surrounds the direction change portion toward the direction change portion and a step of causing the laser light to scan from the direction change portion toward the points on the sides of the polygon.

7. The laser machining method according to any one of claims 1 to 6,
wherein the direction change portion is positioned at a center of the region to be machined.

8. The laser machining method according to any one of claims 1 to 7, further comprising:
a step of repeatedly executing the scanning step on the next region to be machined so as to form a plurality of cells.

9. The laser machining method according to claim 8,
wherein the plurality of cells are arranged two-dimensionally.

10. The laser machining method according to claim 8,
wherein the plurality of cells are arranged one-dimensionally.

11. A laser machining apparatus comprising:
a laser light source that emits laser light;
a scanning mechanism for causing the laser light to scan; and
a control unit configured to control the scanning mechanism,
wherein the control unit controls the scanning mechanism so as to change a scanning direction of the laser light a plurality of times in a direction change portion within a region to be machined.

12. The laser machining apparatus according to claim 11,
wherein the control unit controls the scanning mechanism so as to change the scanning direction of the laser light in a direction that forms an acute angle with respect to a scanning direction before being changed.

13. The laser machining apparatus according to claim 11 or 12,
wherein the control unit controls the scanning mechanism such that the laser light scans in accordance with a scanning pattern that includes a plurality of straight lines extending radially from the direction change portion.

14. The laser machining apparatus according to claim 13,
wherein the scanning pattern includes a pattern in which the scanning direction of the laser light is folded back outward of the direction change portion.

15. The laser machining apparatus according to claim 13 or 14,
wherein the scanning pattern includes a straight line that connects a curve that surrounds the direction change portion and the direction change portion.

16. The laser machining apparatus according to claim 13 or 14,
wherein the scanning pattern includes a straight line that connects the direction change portion and sides of a polygon that surrounds the direction change portion.
